Europäisches Patentamt

European Patent Office

Office européen des brevets

(19)

(11) Numéro de publication: **0 232 647 B1**

(12) **FASCICULE DE BREVET EUROPEEN**

(45) Date de publication de fascicule du brevet:
03.07.91

(51) Int. Cl.5: **B60N 2/50, B60N 2/38**

(21) Numéro de dépôt: 86402814.7

(22) Date de dépôt: **16.12.86**

(54) **Dispositif support de siège oscillant avec suspension hydropneumatique pour véhicules tout terrain.**

(30) Priorité: **17.12.85 FR 8518679**

(43) Date de publication de la demande:
**19.08.87 Bulletin 87/34**

(45) Mention de la délivrance du brevet:
**03.07.91 Bulletin 91/27**

(84) Etats contractants désignés:
**DE GB IT**

(56) Documents cités:
DE-A- 2 709 123      FR-A- 1.106 424
FR-A- 1 361 060      FR-A- 1 396 832
FR-A- 1 526 334      FR-A- 1 558 324
FR-A- 2 061 931      FR-A- 2 418 721
US-A- 2 681 686      US-A- 3 466 089
US-A- 3 632 076

(73) Titulaire: **Molinier, André**
**61 rue Perronet**
**F-92200 Neuilly Sur Seine(FR)**

Titulaire: **Marret, Philippe**
**20 avenue Claire**
**F-95100 Argenteuil(FR)**

(72) Inventeur: **Molinier, André**
**61 rue Perronet**
**F-92200 Neuilly Sur Seine(FR)**
Inventeur: **Marret, Philippe**
**20 avenue Claire**
**F-95100 Argenteuil(FR)**

## Description

La présente invention concerne un dispositif de support de siège pour permettre au conducteur d'un véhicule motorisé ou non, utilisé en travaux publics, en exploitation agricole, en exploitation industrielle ou autres, de conserver une position horizontale quelle que soit l'inclinaison latérale du véhicule.

Le dispositif comprend également un système de suspension neutralisant l'effet des réactions provoquées par les aspirités du sol.

Différents types de stabilisateurs sont connus répondant au préambule de la revendication 1, par exemple par DE-A-2 709 123. Le dispositif selon l'invention permet en effet de maintenir le siège d'un véhicule dans une station horinzontale quelle que soit l'inclinaison latérale de ce dernier, et de disposer d'une suspension qui absorbe efficacement les réactions brutales dues aux aspirités du sol lors de son déplacement, et d'assurer ainsi au conducteur une position physiologique très confortable quelle que soit la topographie du terrain. Il comporte en effet un support articulé composé d'une pièce oscillante dans laquelle est aménagée, en son centre, le système de suspension supportant le siège, et d'une pièce fixe support d'ensemble.

Ce support est constitué d'un ensemble oscillant monté en rotation par deux pivots situés à sa partie supérieure, et agencé à l'intérieur d'une pièce support d'ensemble fixée au chassis, la pièce libre se trouvant suspendue La pièce fixe comporte à sa partie inférieure des moyens de freinage de la partie oscillante.

L'ensemble oscillant logé à l'intérieur de la pièce fixe contient des moyens de guidage vertical et de suspension du siège. Ces moyens sont constitués selon un mode de réalisation préféré de deux tube coulissant l'un dans l'autre. Dans le tube fixe est aménagé un cylindre hydraulique de suspension relié à un accumulateur oléopneumatique sous pression lequel est disposé horizontalement dans un berceau support entre le tube coulissant et l'un des flancs intérieurs du support oscillant.

A l'intérieur de ce même tube entourant le cylindre de suspension et reposant sur son embase, est aménagé un ressort sur lequel prend appui le plateau porte-siège, en cas de surcharge ou de défaillance de la suspension hydraulique.

La pièce oscillante comporte également un plateau porte-siège, solidaire à la fois du tube coulissant verticalement sur le tube fixe de guidage, et de la tige du cylindre de suspension. Afin d'éviter une rotation horizontale du plateau dans le cas où les tube sont cylindriques, est aménagée sur le tube coulissant une lumière guidée par une pièce rectangulaire fixée d'une façon positive au corps du tube fixe.

Le système de freinage de la partie oscillante est constitué d'une surface de friction située à l'extérieur de chacune de ses faces verticales, lesquelles sont mises en contact avec un système de plaquettes. Les plaquettes sont montées libres sur les flancs intérieurs de la pièce fixe. Les dites plaquettes sont guidées chacune par un goujon sur lequel elles coulissent.

Le réglage d'efficacité de freinage s'obtient en agissant sur un dispositif moleté prévu à cet effet.

Selon la forme de réalisation présentée sur les dessins annexés qui illustrent l'invention:

La figure 1 représente en coupe vue d'élévation l'ensemble de l'appareil.

La figure 2 représente en coupe vue de gauche, suivant AA, le système de freinage mécanique.

La figure 3 représente en coupe vue de gauche, suivant AA, un détail de l'appareil équipé du cylindre de suspension tige sortie et du dispositif anti rotation du plateau porte siège.

La figure 4 représente en coupe vue de dessus, suivant CC, l'ensemble équipé de son système de suspension de de freinage et de guidage.

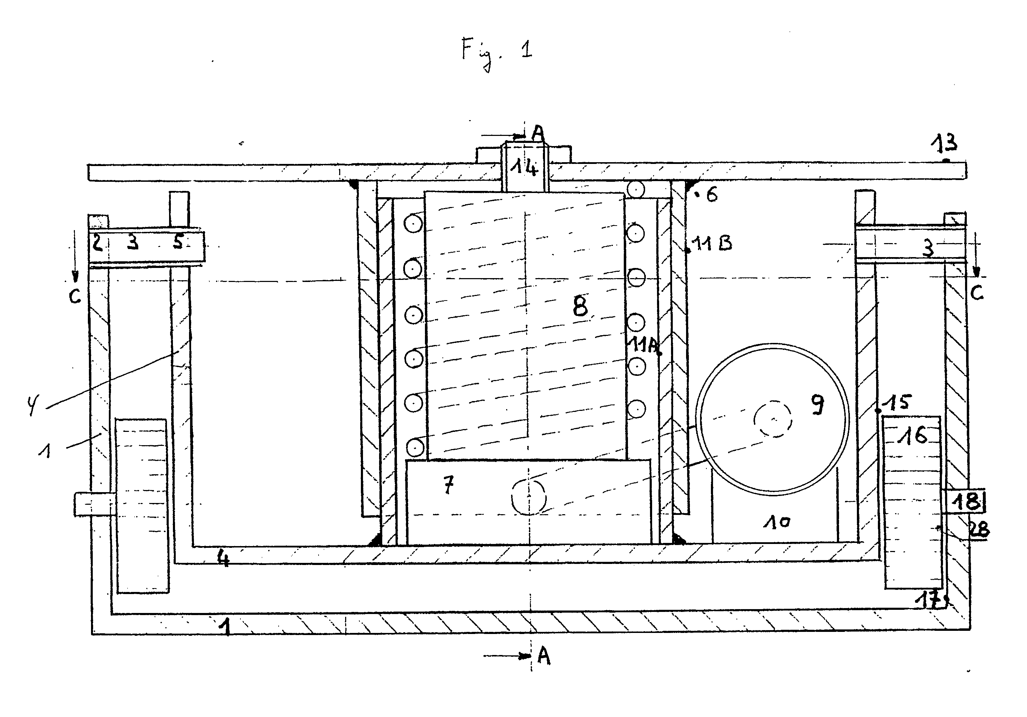

Il ressort de ce qui précéde que le dispositif représenté sur la figure 1 comporte essentiellement un support d'ensemble destiné à être fixé au chassis ou à une assise de véhicule.

Il est constitué d'un chassis support (1) en forme de U comportant à sa partie supérieure deux articulations (2,3,5);d'une pièce oscillante (4) venant se loger à l'intérieur de la pièce fixe ou chassis support (1) en forme de U, constituée d'une pièce façonnée elle aussi en forme de U, suspendue par la dite articulation (2,3,5) en sa partie supérieure, ladite pièce oscillante(4)étant équipée intérieurement d'un élément de guidage vertical(6), constitué de deux tubes(11A,11B)-coulissant l'un dans l'autre et du dispositif de suspension du siège, ledit élément(6)servant à la fois de logement à un cylindre hydraulique de suspension(7)et à un ressort hélicoïdal(8) disposé autour du cylindre reposant sur son embase.

Le cylindre hydraulique est relié à un accumulateur oléopneumatique (9) sous pression, disposé horizontalement sur le côté, dans un berceau support (10) entre le tube coulissant (11B) et l'un des flancs intérieurs de la pièce oscillante (4).

Le ressort hélicoïdal a pour fonction d'encaisser les effets de surcharge et d'assurer la suspension du siège en cas de défaillance du système hydropneumatique.

Le tube de guidage (11A) mentionné ci-dessus est utilisé également pour servir de guide à un tube (11B) coulissant verticalement sur lequel est fixé par soudure, à sa partie supérieure, un plateau porte siège (13) ce dernier reposant sur la tige (14) du cylindre hydraulique (7) à laquelle il est fixé.

Pour éviter toute rotation autour de l'axe du cylindre hydraulique dans le cas où les tubes sont cylindriques, le tube coulissant (11B) comporte une lumière (27) guidée par une pièce rectangulaire (35) fixée d'une façon positive au corps du tube fixe de guidage (11A).

Les pièces en forme de U décrites ci-dessus sont articulées entre elles longitudinalement.

La suspension hydropneumatique est assurée par la compression exercée sur le réservoir de l'accumulateur pneumatique par le cylindre de suspension.

Le réglage de la pression sur l'accumulateur est directement fonction de la charge statique appliquée au siège.

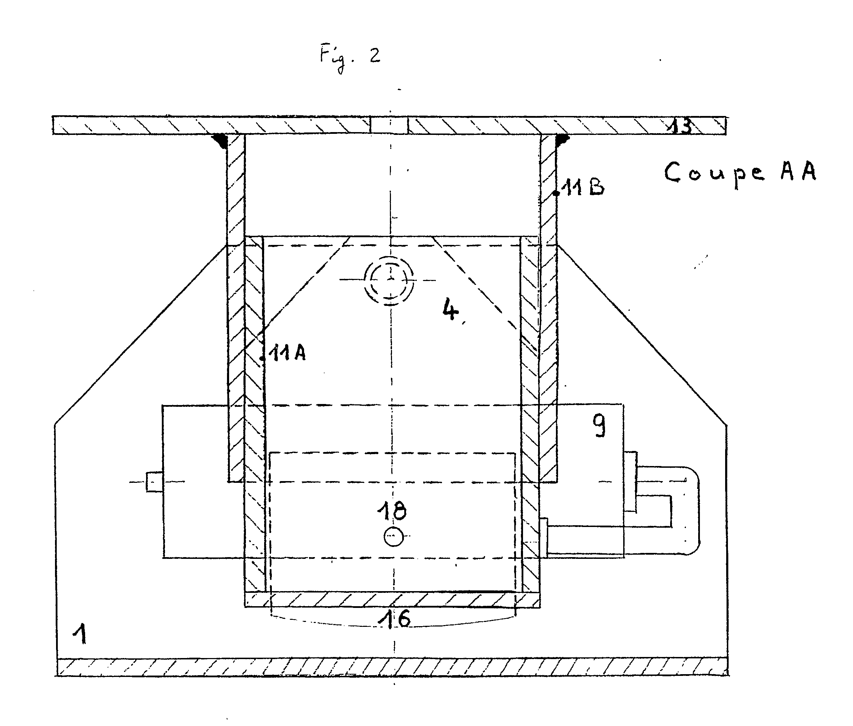

Dans la forme de réalisation selon les figures 1 et 2, la pièce oscillante (4) comporte un système de freinage (28) constitué d'une surface de friction (15) aménagée à l'extérieur de chacune de ses faces verticales, laquelle est mise en contact avec un système de plaquettes (16). Ces plaquettes (16) sont montées libres sur les flancs intérieurs du chassis support (1).

Lesdites plaquettes (16) sont guidées chacune par un goujon sur lesquelles elles coulissent.

Le réglage d'efficacité s'obtient en agissant sur un dispositif moleté situé à l'extérieur des flancs du chassis support (1) comportant une pièce filetée (18), dont une des extrémités arrondies agissant au centre de la plaquette, permet à cette dernière un mouvement, offrant ainsi une meilleure répartition de la friction.

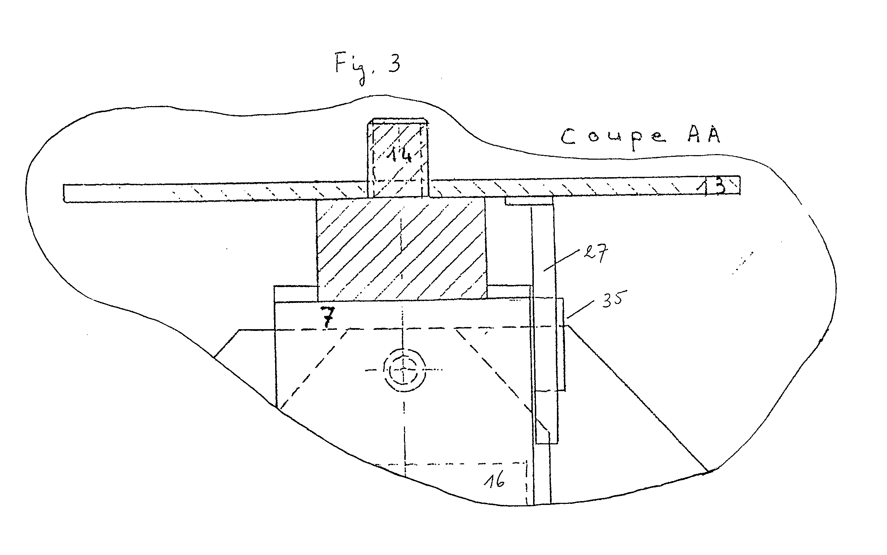

Dans la forme de réalisation décrite ci-dessus la figure 3 représente, en coupe suivant AA, un détail de la pièce oscillante (4) comportant l'aménagement du cylindre de suspension (7) tige (14) sortie, et l'aménagement du tube de guidage (11A) sur lequel est fixé une pièce rectangulaire (35) servant de guide à son coulissement dans une lumière (27) du tube (11B) solidaire du plateau porte siège (13) afin d'en éviter la rotation.

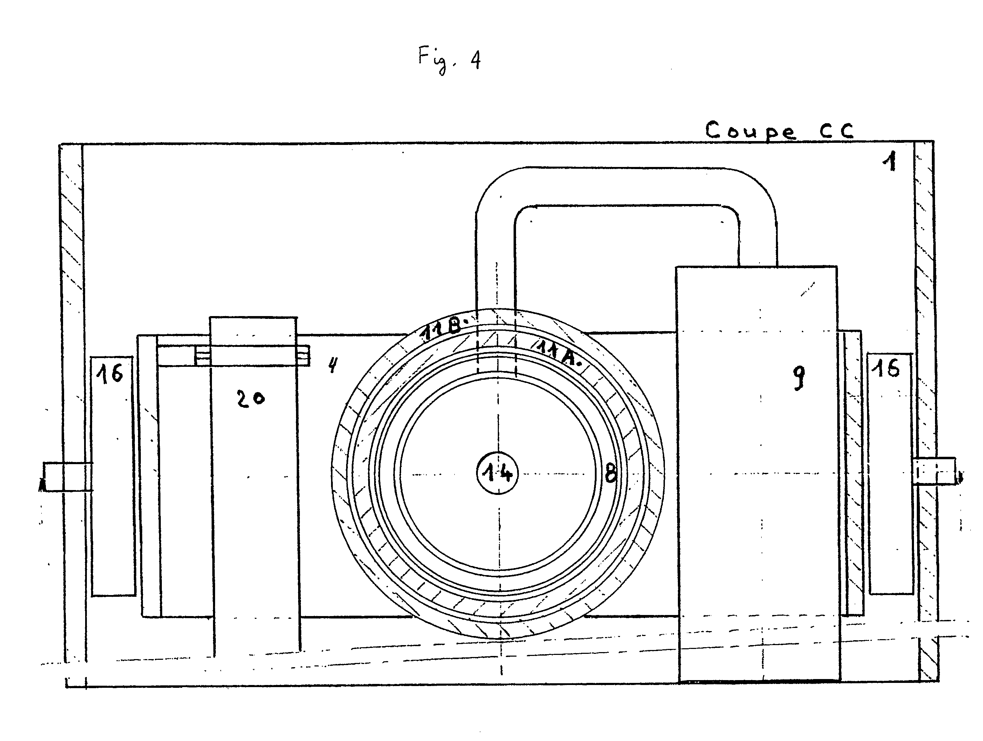

Il ressort des déscriptions précédentes que la figure 4 représente une coupe vue de dessus suivant CC l'ensemble équipé de son système de suspension et de freinage.

## Revendications

1. Dispositif support de siège pour véhicule tout terrain, par exemple agricole, travaux publics, ou autres, permettant au conducteur de conserver une station horizontale constante, quelle que soit l'inclinaison latérale du véhicule, par un système à stabilisation pendulaire (1-5), ce dispositif comportant un chassis support (1) fixé au véhicule et une pièce (4) oscillante autour de l'axe longitudinal de conduite par une articulation (2,3,5), ledit dispositif étant doté d'un système de guidage du mouvement veritcal (6) et d'un système de freinage (28) du mouvement oscillant du siège, du type à friction,
   caractérisé en ce que:
   a) le chassis support (1) est réalisé en forme de U à flancs triangulaires en sa partie supérieure où est aménagée l'articulation (2,3,5);
   b) ladite pièce oscillante (4) est suspendue par la dite articulation (2,3,5) à l'intérieur du chassis support (1);
   c) lesdits moyens de guidage vertical (6) du type à coulissement sont aménagés entre la pièce oscillante (4) et un plateau (13) supportant le siège;
   d) le système de suspension est de type hydropneumatique et est incorporé dans les moyens de guidage vertical (6);
   e) lesdits moyens de freinage (28) sont aménagés entre le chassis support (1) et la pièce oscillante (4).

2. Dispositif selon la revendication 1, caractérisé en, ce que la pièce oscillante (4) comporte dans un tube fixe de guidage (11A) solidaire de sa base un cylindre hydraulique de suspension (7) ,relié à un accumulateur oléopneumatique (9) et entourant ce dernier un ressort hélicoïdal (8) de butée, reposant sur son embase.

3. Dispositif selon les revendications 1 ou 2, caractérisé en ce que le plateau porte siège (13) rendu solidaire du tube coulissant (11B) vertical, par vis de serrage de la tige (14) du cylindre de suspension (7), est dirigé dans son coulissement par une lumière (27) pratiquée dans ledit tube coulissant (11B) sur une pièce rectangulaire (35), reliée d'une façon positive sur le corps du tube fixe de guidage (11A) afin d'éviter toute rotation horizontale.

4. Dispositif selon la revendication 1, caractérisé en ce que le système de freinage (28) est constitué de deux surfaces de friction (15), lesquelles sont mises en contact avec un système de plaquettes (16), lesdites plaquette (16) étant montées libres sur les flancs intérieurs (17) de la pièce fixe (1) et étant guidées chacune par un goujon sur lequel elles coulissent, commandées par un dispositif moleté comportant une pièce filetée (18) dont une extrémité agit au centre de ladite plaquette (16).

## Claims

1. Seat support device for cross-country vehicles, e.g. for agriculture, public works or other purposes, enabling the driver the maintain a constant horizontal position, regardless of the lateral slant of the vehicle, by means of a pivoted device (1-5), which device is equipped with a support frame (1), mounted on the vehicle, and an part (4) oscillating around the longitudinal driving axe by means of a joint (2, 3, 5), the said device being equipped with a vertical movement guiding system (6) and a friction-type braking system (28) of the seat's oscillating movements, characterized by the following:

   a) The support frame (1) is shaped like a U with triangular edges in the upper part where the joint is arranged (2, 3, 5);
   b) The said oscillating part (4) is suspended by the said joint (2, 3, 5) inside the support frame (1);
   c) The said sliding-type vertical guiding system (6) is mounted between the oscillating part (4) and a plate (13) supporting the seat;
   d) The suspension system is of the hydropneumatic type and is built into the vertical guiding system (6);
   e) The said braking system (28) is mounted between the support frame (1) and the oscillating part (4).

2. Device according to claim (1), characterized by the fact that the oscillating part (4) contains in a fixed guiding tube, fixed to its base, a hydraulic suspension cylinder (7), linked to an oleopneumatic storage battery (9) and around the latter a helical limit-stop spring (8) resting on its base.

3. Device according to claims 1 or 2, characterized by the fact that the seat support plate (13), joined to the vertical sliding tube (11B), by means of the fastening screw of the rod (14) of the suspension cylinder (7), is guided in its sliding by a lamp (27) fitted in the said sliding tube (11B) on a rectangular piece (35), positively connected to the body of the fixed guiding tube (11a) in order to avoid horizontal rotation.

4. Device according to claim (1), characterized by the fact that the braking system (28) consists of two friction surfaces (15), which are put in contact with a system of plates (16), the said plates (16) being mounted freely on the inner edges (17) of the fixed part and each guided by a pin (24 on which they slide, controlled by a knurled device fitted with a threaded part (18) of which one end acts on the center of the

said plate (16).

**Ansprüche**

1. Sitz-Stützvorrichtung für Geländefahrzeuge bspw. in der Landwirtschaft, im Tiefbau o.ä., mit dessen Hilfe der Fahrer durch ein System mit Pendelstabilisierung (1-5) eine konstante waagrechte Stellung einnimmt, unabhängig von der seitlichen Neigung des Fahrzeugs; diese Vorrichtung besteht aus einem am Fahrzeug befestigten Stützgestell (1) und einem mittels Gelenkverbindung (2,3,5) um die Fahrlängsachse oszillierenden Teil (4). Besagte Vorrichtung ist mit einem Lenksystem für die Vertikalbewegung (6) und einem Reibungs-Bremssystem (28) für die Oszillationsbewegung des Sitzes ausgestattet.

   Sie hat folgende Merkmale:

   a) Das Stützgestell (1) hat die Form eines U mit dreieckigen Seiten im oberen Teil, in dem die Gelenkverbindung (2,3,5) angebracht ist;
   b) besagtes oszillierendes Teil (4) ist durch besagte Gelenkverbindung (2,3,5) im Inneren des Stützgestells (1) aufgehängt;
   c) besagte gleitende vertikale Lenkvorrichtungen (6) sind zwischen dem oszillierenden Teil (4) und einer Scheibe (13) angebracht, die dem Sitz als Unterlage dient;
   d) das hydropneumatische Aufhängungssystem ist in die vertikalen Lenkvorrichtungen eingefügt;
   e) besagte Bremsvorrichtungen (28) sind zwischen dem Stützgestell (1) und dem oszillierenden Teil (4) angebracht.

2. Die Vorrichtung wird gemäß Anspruch 1 dadurch charakterisiert, daß das oszillierende Teil (4) in einem festen Lenkrohr (11 A), das fest mit seinem Sockel verbunden ist, einen hydraulischen Aufhängungszylinder (7) umfaßt, der wiederum mit einem Öl-Luft-Akkumulator 99) verbunden ist und letzteren mit einer Anschlag-Spiralfederung (8) umgibt, die auf seinem Sockel befestigt ist.

3. Die Vorrichtung wird gemaß den Ansprüchen 1 oder 2 dadurch charakterisiert, daß die den Sitz tragende Scheibe (13) mittels Schraube fest mit dem senkrechten gleitenden Rohr (11B) sowie mit der Stange (14) des Aufhängungszylinders (7) verbunden ist und in seiner Gleitbewegung durch ein Licht (27) in besagtem gleitenden Rohr (11B) auf einem rechteckigen Teil (35) gesteuert wird, welches wiederum fest mit dem Körper des festen Lenkrohrs (11A) verbunden ist, um jegliche waagrechte Rotation zu vermeiden.

4. Die Vorrichtung wird gemäß Anspruch 1 dadurch charakterisiert, daß das Bremssystem (28) aus zwei Reibungsflächen (15) besteht, die mit einem Bremsplattensystem (16) in Verbindung gebracht werden; diese Bremsplatten sind frei auf die Innenseiten (17) des festen Teils (1) montiert und werden jede einzeln durch einen Stift (24) gelenkt, auf dem sie gleiten; sie werden gesteuert durch eine geriffelte Vorrichtung, die ein Gewinde (18) enthält, dessen eines äußerstes Ende auf den Mittelpunkt besagter Bremsplatte (16) wirkt.

Fig. 1

EP 0 232 647 B1

Fig. 2

Coupe AA

11B

11A

4

9

18

16

1

EP 0 232 647 B1

Fig. 3

Coupe AA

14

13

27

35

7

16

Fig. 4

Coupe CC

1

16

20

4

11B

11A

14

8

9

16

6

EP 0 232 647 B1